# EUROPÄISCHE PATENTSCHRIFT

(11) **EP 2 698 237 B1**
(45) Veröffentlichungstag und Bekanntmachung des Hinweises auf die Patenterteilung: **03.12.2014**
(21) Anmeldenummer: 13175172.9
(22) Anmeldetag: 04.07.2013
(51) Int. Cl.: B29B 11/14, B29C 49/00, B29K 67/00, B29K 105/00, B29C 49/08, B65D 1/02, B65D 81/28, B29C 49/06

(54) **Vorformling zum Herstellen eines Behältnisses, Verfahren zum Herstellen eines Behältnisses und Verwendung.**
Preform used for the production of a container, method for producing of a container, and use.
Ebauche pour la fabrication d'un récipient, procédé de fabrication d'un récipient et utilisation.

(30) Priorität: 16.08.2012 DE 102012107505
(43) Veröffentlichungstag der Anmeldung: 19.02.2014
(73) Patentinhaber: INOTECH Kunststofftechnik GmbH, 92507 Nabburg (DE)
(72) Erfinder: Gleixner, Josef, 93047 Regensburg (DE)
(74) Vertreter: Hannke, Christian

(56) Entgegenhaltungen:
- WO-A2-2010/137015
- DATABASE WPI Week 199633 Thomson Scientific, London, GB; AN 1996-329202 XP002715996, -& JP H08 151083 A (NAKAMURA K) 11. Juni 1996 (1996-06-11)
- DATABASE WPI Week 199344 Thomson Scientific, London, GB; AN 1993-348095 XP002715997, -& JP H05 254527 A (KAMAYA CHEM IND CO LTD) 5. Oktober 1993 (1993-10-05)

## Beschreibung

Die Erfindung betrifft einen Vorformling zum Herstellen eines Behältnisses zum Aufnehmen eines Produkts, insbesondere eines Lebensmittels, mit einem eine Kavität aufweisenden expandierbaren Grundkörper aus einem Mehrkomponentenmaterial umfassend wenigstens zwei aneinander grenzende Materialbereiche.

Die Erfindung betrifft darüber hinaus ein Behältnis mit einer Kavität zum Aufnehmen eines Produkts, insbesondere eines Lebensmittels, und mit einem aus einem Vorformling expandierten Grundkörper, welcher die Kavität zumindest teilweise umgibt.

Des Weiteren betrifft die Erfindung ein Verfahren zum Herstellen eines Behältnisses aus einem Vorformling, bei welchem der Vorformling aus einem Mehrkomponentenmaterial zu dem Behältnis mit einer Kavität expandiert wird.

Auch betrifft die Erfindung eine Verwendung einer Wandung eines zu einem Behältnis expandierbaren Vorformlings.

Insbesondere gattungsgemäße Vorformlinge und daraus hergestellte Behältnisse sind aus dem Stand der Technik, siehe z.B. WO 2010137015 - speziell aus der Getränkeindustrie - sehr gut bekannt. Mittels der verwendeten Mehrkomponentenmaterialien kann die Gestaltungsvielfalt hinsichtlich der herzustellenden Behältnisse vorteilhaft erhöht werden.

Es ist Aufgabe der vorliegenden Erfindung herkömmliche Vorformlinge weiterzuentwickeln, um Gebrauchseigenschaften von daraus hergestellten Behältnissen wesentlich zu verbessern.

Die Aufgabe der Erfindung wird von einem Vorformling zum Herstellen eines Behältnisses zum Aufnehmen eines Produkts nach Anspruch 1 gelöst.

Erfindungsgemäß ist der antimikrobiell wirkende Wirkstoff in dem Grundkörper des Vorformlings bzw. Behältnisses eingebettet, wodurch vorteilhafter Weise auf ein nachträgliches Auftragen eines derartigen antimikrobiell wirkenden Wirkstoffs verzichtet werden kann oder wodurch dieser zumindest nur noch in einem geringeren Maße nachträglich von Außen aufgetragen werden muss. Idealerweise kann auch auf eine antiseptische Behandlung des aus dem Vorformling hergestellten Behältnisses und/oder auch des Vorformlings zur Gänze oder teilweise verzichtet werden.

Jedenfalls ist es vorliegend möglich, ein in dem Behältnis eingefülltes Produkt, insbesondere ein Lebensmittel, wie etwa ein Getränk, konstruktiv und verfahrenstechnisch auf außergewöhnlich einfache Weise mit einem antimikrobiell wirkenden Wirkstoff in Kontakt zu bringen, insbesondere auch dauerhaft.

Mit dem Begriff "Depot" ist im Sinne der Erfindung eine Ansammlung von antimikrobiellem Wirkstoff oder dergleichen gemeint.

Bei einem derartigen Behältnis handelt es sich vorzugsweise um ein Behältnis zum Aufnehmen und Zwischenlagern von Getränken. Als besonders vorteilhaft hat sich vorliegende Erfindung erwiesen, wenn es sich bei dem vorliegenden Behältnis um ein Bierfass handelt.

Darüber hinaus wird die Erfindung auch von einem Verfahren nach Anspruch 7 gelöst.

Hierdurch kann auf konstruktiv besonders einfache Weise ein antimikrobiell wirkender Wirkstoff mit einem später in das Behältnis eingefüllten Produkt wechselwirken.

Vorteilhafter Weise kann der antimikrobiell wirkende Wirkstoff an sich in das Mehrkomponentenmaterial substituiert oder alternativ mittels eines Trägerelements in das Mehrkomponentenmaterial eingebettet sein. Ein solches Trägerelement kann in vielfältiger Gestalt realisiert sein.

Als sehr vorteilhaft hat sich hierbei der Einsatz von Glaskugeln erwiesen. Insofern ist es auch sehr vorteilhaft, wenn der antimikrobiell wirkende Wirkstoff mit Hilfe von Glaskugeln in den Grundkörper eingelagert ist.

Die Erfindung sieht vor, dass der antimikrobiell wirkende Wirkstoff in wenigstens einem derMaterialbereiche angeordnet ist. Hierdurch kann das Mehrkomponentenmaterial bzw. zumindest eine Materialkomponente hiervon konstruktiv außergewöhnlich vorteilhaft als Depoteinrichtung für den antimikrobiell wirkenden Wirkstoff dienen.

In diesem Zusammenhang sei angemerkt, dass die Aufgabe der Erfindung auch von einer Verwendung einer Wandung eines zu einem Behältnis expandierbaren Vorformlings zum Einbetten eines antimikrobiell wirkenden Wirkstoffs nach Anspruch 8 gelöst wird.

Damit der antimikrobiell wirkende Wirkstoff mit einem in der Kavität eingefüllten Produkt einfacher wechselwirken kann, ist der den antimikrobiell wirkenden Wirkstoff aufweisende Materialbereich der Kavität zugewandt angeordnet.

Die Erfindung sieht vor, dass der den antimikrobiell wirkenden Wirkstoff aufweisende Materialbereich an einem Mündungsbereich der Kavität gegenüberliegenden Ende des Vorformlings angeordnet ist. Hiermit befindet sich das Depot mit dem antimikrobiellen Wirkstoff vorteilhafter Weise an einem stark expandierenden Bereich des Vorformlings, so dass nach dem Expansionsvorgang ein vorteilhaft großer Kontaktbereich zwischen dem in das Behältnis eingefüllten Produkt und dem Depot bereitgestellt werden kann.

Eine ausgezeichnete Wechselwirkung zwischen dem Depot mit dem antimikrobiellen Wirkstoff und dem später in das Behältnis eingefüllten Produkt kann erzielt werden, wenn das Depot zumindest teilweise um die Kavität herum angeordnet ist.

Die Erfindung sieht vor, dass wenn das Depot halbkugelförmig ausgebildet ist. Hierdurch kann nach der Expansion des Vorformlings an dem Behältnis eine besonders große Kontaktfläche ausgestaltet werden.

Die wenigstens zwei aneinander grenzenden Materialbereiche sind vorteilhafter Weise derart nebeneinander angeordnet, dass einer der Materialbereiche eine Außenwandung des Vorformlings und ein weiterer der Materialbereiche zumindest teilweise eine hierzu weiter innen liegende Innenwandung des Vorformlings ausgestalten.

Weitere Vorteile, Ziele und Eigenschaften der vorliegenden Erfindung werden anhand anliegender Zeichnung und nachfolgender Beschreibung erläutert, in welchen beispielhaft ein Vorformling umfassend ein Depot mit einem antimikrobiell wirkenden Wirkstoff und ein aus diesem Vorformling expandierten Behältnis dargestellt und beschrieben sind. In der Zeichnung zeigen:
- Figur 1: schematisch einen Längsschnitt durch einen Vorformling mit einem expandierbaren Grundkörper umfassend ein Depot mit einem antimikrobiell wirkenden Wirkstoff;
- Figur 2: schematisch eine Detailansicht des in einem Materialbereich des in der Figur 1 gezeigten Vorformlings angeordneten Depots mit dem antimikrobiell wirkenden Wirkstoff;
- Figur 3: schematisch eine Detailansicht des das Depot umfassenden Materialbereichs des bereits zu einem Behältnis expandierten Grundkörpers aus den Figuren 1 und 2;
- Figur 4: schematisch eine Vergrößerungsansicht der Detailansicht aus der Figur 3; und
- Figur 5: schematisch einen Längsschnitt eines aus dem in den Figuren 1 und 2 gezeigten Vorformling hergestellten Behältnisses.

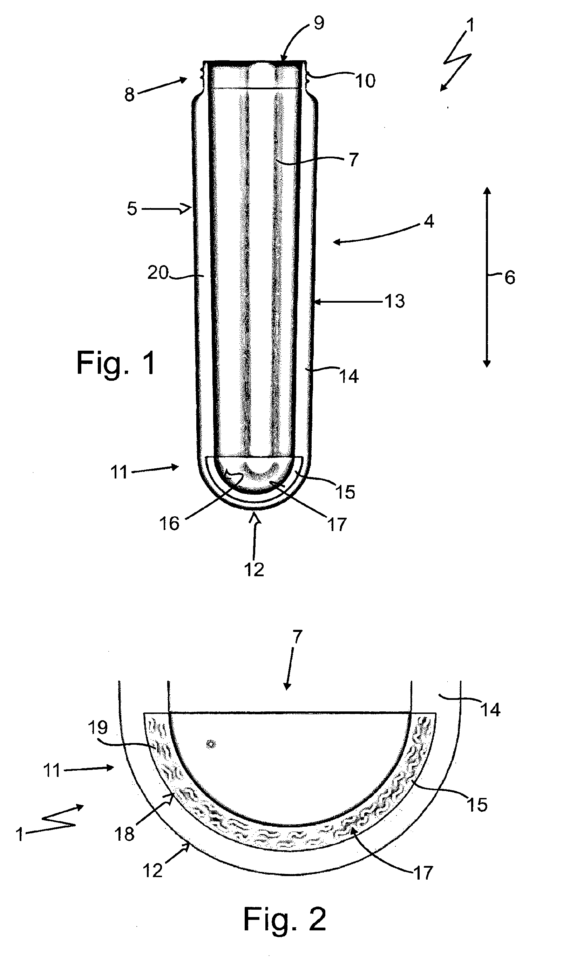

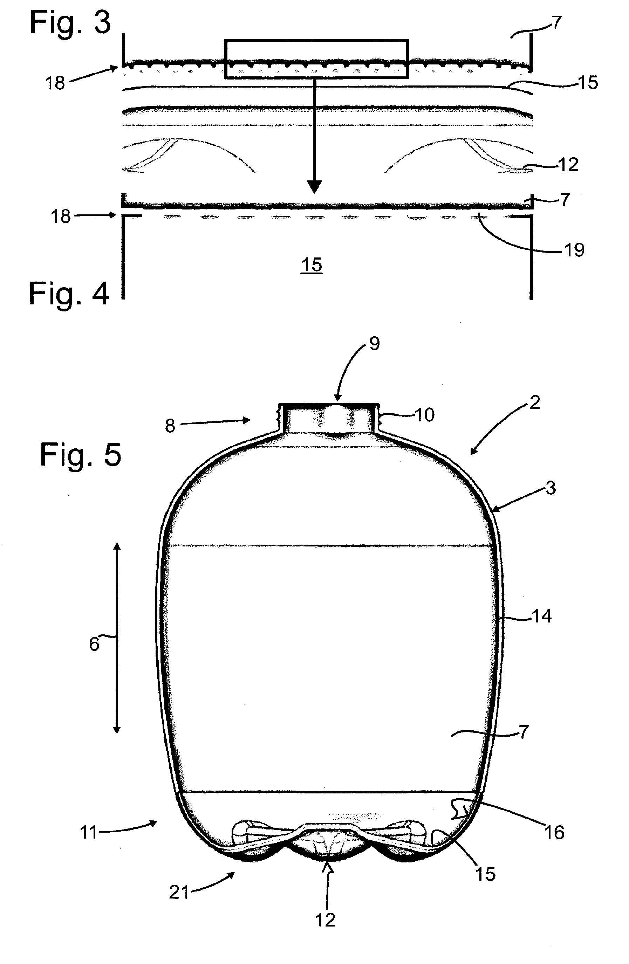

Der in den Figuren 1 und 2 gezeigte Vorformling 1 dient zum Herstellen eines Behältnisses 2 (siehe insbesondere Figur 5) zum Aufnehmen eines Produktes (hier nicht gezeigt). Bei dem Behältnis 2 handelt es sich um ein Bierfass 3, in welchem demzufolge Bier (hier nicht gezeigt) eingefüllt und zwischengelagert wird.

Der Vorformling 1 besteht idealweise aus einem expandierfähigen Kunststoffmaterial, wie etwa Polyethylenterephthalat (PET), welches in einem Blasverfahren oder einem Streckblasverfahren mit Hilfe einer Blasform einer Blasmaschine von der Vorformgestalt des Vorformlings 1 in die Behältnisgestalt des Behältnisses 2 umgeformt wird.

Der Vorformling 1 weist einen Grundkörper 4 in Form eines länglichen Zylinderteils 5 auf, der in Richtung seiner Längserstreckung 6 eine längliche Kavität 7 begrenzt.

An einem ersten Endbereich 8 des Grundkörpers 4 ist der Vorformling 1 offen. Er weist dort einen Mündungsbereich 9 (siehe auch Figur 5) mit einem Außengewinde 10 auf, wobei die Kavität 7 nur über den Mündungsbereich 9 zugänglich ist.

An einem zweiten, dem ersten Endbereich 8 gegenüberliegenden Endbereich 11 ist der Grundkörper 4 halbkugelförmig ausgestaltet, wobei der zweite Endbereich 11 einen Bodenbereich 12 (siehe auch Figur 5) formuliert.

Der Grundkörper 4 besteht in diesem Ausführungsbeispiel aus einem Mehrkomponentenmaterial 13, welches zu dem Behältnis 2 expandiert werden kann. Das Mehrkomponentenmaterial 13 weist hierbei zwei Materialbereiche 14 und 15 auf. Die zwei Materialbereiche 14 und 15 können aus dem gleichen Komponentenmaterial oder aus unterschiedlichen Komponentenmaterialien bestehen.

Der zweite Materialbereich 15 ist nur im zweiten Endbereich 11, also im Bodenbereich 12, des Grundkörpers 4 vorgesehen, und er erstreckt sich in dem zweiten Endbereich 11 halbhohlkugelförmig an einer der Kavität 7 zugewandten Oberflächenseite 16 des Grundkörpers 4.

Insofern ist der zweite Materialbereich 15 als Halbhohlkugelelement 17 in dem zweiten Materialbereich 16 eingespritzt bzw. eingebettet angeordnet.

Dementsprechend liegt der zweite Materialbereich 15 immer innen neben dem ersten Materialbereich 14 und begrenzt die Kavität 7 zumindest im zweiten Endbereich 11.

Der zweite 15 der beiden Materialbereiche 14 und 15 ist erfindungsgemäß mit einem Depot 18 umfassend einen antimikrobiell wirkenden Wirkstoff 19 versehen. Somit wohnen zumindest dem zweiten Materialbereich 15 antimikrobielle Eigenschaften inne.

Dementsprechend umfasst das Halbhohlkugelelement 17 das Depot 18; insofern ist das Depot 18 halbhohlkugelförmig ausgestaltet.

Zumindest im zweiten Endbereich 11 bzw. im Bodenbereich 12 ist die Wandung 20 des Grundkörpers 4 sowohl von dem ersten Materialbereich 14 als auch von dem zweiten Materialbereich 15 ausgebildet, während die Wandung 20 im übrigen Bereich des Grundkörpers 4 lediglich von dem ersten Materialbereich 14 ausgestaltet ist.

Wird nun der Vorformling 1 in einem Blas- oder Streckblasverfahren zu dem Behältnis 2 umgeformt, gelangt der in dem zweiten Materialbereich 15 angeordnete antimikrobiell wirkende Wirkstoff 19 aufgrund der Dehnung des Grundkörpers 4 derart bis an die der Kavität 7 zugewandten Oberflächenseite 16, dass das in das Bierfass 3 eingefüllte Bier (nicht gezeigt) mit dem antimikrobiell wirkenden Wirkstoff 19 vorteilhafter Weise wechselwirken kann.

Durch den hierbei stattfindenden Expansionsvorgang vom Vorformling 1 zu dem Behältnis 2 verändert sich das vorhandene Depot 18 innerhalb des Grundkörpers 4 zumindest hinsichtlich seiner Größe, nämlich es dehnt sich mit dem Grundkörper 4 bzw. speziell mit zweiten Endbereich 11 des Grundkörpers 4 zu der speziellen versteiften Bodenbereichsgestalt 21 des Bodenbereichs 12 des fertig geblasenen Behälters 2 aus.

Es versteht sich, dass es sich bei dem vorstehend erläuterten Ausführungsbeispiel lediglich um eine erste Ausgestaltung des erfindungsgemäßen Vorformlings handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorformling
- 2: Behältnis
- 3: Bierfass
- 4: Grundkörper
- 5: Zylinderteil
- 6: Längserstreckung
- 7: Kavität
- 8: erster Endbereich
- 9: Mündungsbereich
- 10: Außengewinde
- 11: zweiter Endbereich
- 12: Bodenbereich
- 13: Mehrkomponentenmaterial
- 14: erster Materialbereich
- 15: zweiter Materialbereich
- 16: zugewandte Oberflächenseite
- 17: Halbhohlkugelelement
- 18: Depot
- 19: Wirkstoff bzw. Substanz
- 20: Wandung
- 21: Bodenbereichsgestalt

## Patentansprüche

1. Vorformling (1) zum Herstellen eines Behältnisses (2) zum Aufnehmen eines Produkts, insbesondere eines Lebensmittels, mit einem eine Kavität (7) aufweisenden expandierbaren Grundkörper (4) aus einem Mehrkomponentenmaterial (13) umfassend wenigstens zwei aneinander grenzende Materialbereiche (14, 15), wobei
der expandierbare Grundkörper (4) ein Depot (18) mit einem antimikrobiell wirkenden Wirkstoff (19) aufweist, **dadurch gekennzeichnet, dass**
der den Wirkstoff (19) aufweisende Materialbereich (15) an einer der Kavität (7) zugewandten Oberflächenseite (16) des Grundkörpers (4) als Halbhohlkugelelement (17) in dem ersten Materialbereich (14) eingebettet und nur an einem einem Mündungsbereich (9) der Kavität (7) gegenüberliegenden Ende (11) des Vorformlings (1) angeordnet ist, so dass der Wirkstoff (19) später mit einem in der Kavität (7) eingefüllten Produkt wechselwirkt, und wobei ein Übergang zwischen dem ersten Materialbereich (14) und dem zweiten Materialbereich (15) an der der Kavität (7) zugewandten Oberflächenseite (16) stufenfrei ist.

2. Vorformling (1) nach Anspruch 1,
**dadurch gekennzeichnet, dass**
der antimikrobiell wirkende Wirkstoff (19) in wenigstens einem (15) der Materialbereiche (14, 15) angeordnet ist.

3. Vorformling (1) nach einem der Ansprüche 1 bis 2,
**dadurch gekennzeichnet, dass**
das Depot (18) zumindest teilweise um die Kavität (7) herum angeordnet ist.

4. Vorformling (1) nach einem der Ansprüche 1 bis 3.
**dadurch gekennzeichnet, dass**
das Depot (18) hinsichtlich seiner Größe und/oder Lage veränderbar in dem Grundkörper (4) angeordnet ist.

5. Vorformling (1) nach einem der Ansprüche 1 bis 4,
**dadurch gekennzeichnet, dass**
das Mehrkomponentenmaterial (13) wenigstens zwei unterschiedliche Materialkomponenten (14, 15) umfasst, wobei wenigstens eine (15) der unterschiedlichen Materialkomponenten (14, 15) antimikrobielle Eigenschaften aufweist.

6. Behältnis (2) mit einer Kavität (7) zum Aufnehmen eines Produkts, insbesondere eines Lebensmittels, und mit einem aus einem Vorformling (1) expandierten Grundkörper (4), welcher die Kavität (7) zumindest teilweise umgibt,
**dadurch gekennzeichnet, dass**
das Behältnis (2) aus einem Vorformling (1) nach einem der vorstehenden Ansprüche hergestellt ist.

7. Verfahren zum Herstellen eines Behältnisses (2) aus einem Vorformling (1) nach einem der Ansprüche 1 bis 5, bei welchem der Vorformling (1) aus einem Mehrkomponentenmaterial (13) zu dem Behältnis (2) mit einer Kavität (7) expandiert wird.

8. Verwendung einer Wandung (20) eines zu einem Behältnis (2) expandierbaren Vorformlings (1) nach einem der Ansprüche 1 bis 5 zum Einbetten eines antimikrobiell wirkenden Wirkstoffs (19).

## Claims

1. Preform (1) for producing a container (2) for receiving a product, in particular a foodstuff, comprising an expandable main body (4) having a cavity (7) and formed of a multicomponent material (13) comprising at least two material regions (14, 15) adjacent to each other, the expandable main body (4) having a deposit (18) having an antimicrobial agent (19), **characterised in that** the material region (15) having the agent (19) is embedded as a semi-hollow ball element (17) in the first material region (14) on a surface side (16) of the main body (4) facing the cavity (7) and is arranged only at an end (11) of the preform (1) opposite a mouth region (9) of the cavity (7) so that the agent (19) later interacts with a product poured into the cavity (7), and a transition between the first material region (14) and the second material region (15) being smooth on the surface side (16) facing the cavity (7).

2. Preform (1) according to claim 1, **characterised in that** the antimicrobial agent (19) is arranged in at least one (15) of the material regions (14, 15).

3. Preform (1) according to either claim 1 or claim 2, **characterised in that** the deposit (18) is arranged at least in part around the cavity (7).

4. Preform (1) according to any of claims 1 to 3, **characterised in that** the deposit (18) is arranged in the main body (4) so as to be variable in terms of its size and/or position.

5. Preform (1) according to any of claims 1 to 4, **characterised in that** the multicomponent material (13) comprises at least two different material components (14, 15), at least one (15) of the different material components (14, 15) having antimicrobial properties.

6. Container (2) comprising a cavity (7) for receiving a product, in particular a foodstuff, and comprising a main body (4) expanded from a preform (1) and surrounding the cavity (7) at least in part, **characterised in that** the container (2) is produced from a preform (1) according to any of the preceding claims.

7. Method for producing a container (2) from a preform (1) according to any of claims 1 to 5, in which the preform (1) is expanded from a multicomponent material (13) to form the container (2) comprising a cavity (7).

8. Use of a wall (20) of a preform (1) according to any of claims 1 to 5 which can be expanded to form a container (2) for embedding an antimicrobial agent (19).

## Revendications

1. Préforme (1) pour la fabrication d'un récipient (2) destiné à recevoir un produit, plus particulièrement un aliment, avec un corps de base expansible (4) présentant une cavité (7), constitué d'un matériau multicomposant (13) comprenant au moins deux zones de matériaux (14, 15) adjacentes, le corps de base expansible (4) comprenant un dépôt (18) avec une substance active antimicrobienne (19), **caractérisée en ce que** la zone de matériau (15) comprenant la substance active (19) est intégrée, sur un côté de surface (16) du corps de base (4), orienté vers la cavité (7), sous la forme d'un élément semi-sphérique (17), dans la première zone de matériau (14), et se trouve uniquement au niveau d'une extrémité (11) de la préforme (1), disposée en face d'une zone d'embouchure (9) de la cavité (7), de façon à ce que la substance active (19) interagisse plus tard avec un produit introduit dans la cavité (7) et une transition entre la première zone de matériau (14) et la deuxième zone de matériau (15) au niveau du côté de la surface (16) orienté vers la cavité (7) étant progressive.

2. Préforme (1) selon la revendication 1, **caractérisée en ce que** la substance active antimicrobienne (19) se trouve dans au moins une (15) des zones de matériaux (14, 15).

3. Préforme (1) selon l'une des revendications 1 à 2, **caractérisée en ce que** le dépôt (18) est disposé au moins partiellement autour de la cavité (7).

4. Préforme (1) selon l'une des revendications 1 à 3, **caractérisée en ce que** le dépôt (18) est disposé dans le corps de base (4) et sa taille et/ou sa position peut être modifiée.

5. Préforme (1) selon l'une des revendications 1 à 4, **caractérisée en ce que** le matériau multicomposant (13) comprend deux composants de matériau (14, 15) différents, au moins un (15) des composants du matériau (14, 15) présentant des propriétés antimicrobiennes.

6. Récipient (2) avec une cavité (7) destinée à recevoir un produit, plus particulièrement un aliment, et avec un corps de base expansible (4) à partir d'une préforme (1), qui entoure au moins partiellement la cavité (7), **caractérisé en ce que** le récipient (2) est constitué d'une préforme (1) selon l'une des revendications précédentes.

7. Procédé de fabrication d'un récipient (2) à partir d'une préforme (1) selon l'une des revendications 1 à 5, dans lequel la préforme (1), constituée d'un matériau multicomposant (13), est expansée en un récipient (2) avec une cavité (7).

8. Utilisation d'une paroi (20) d'une préforme (1) expansible en un récipient (2) selon l'une des revendications 1 à 5 pour l'intégration d'une substance active antimicrobienne (19).
